# EUROPÄISCHE PATENTSCHRIFT

(11) **EP 1 732 860 B1**
(45) Veröffentlichungstag und Bekanntmachung des Hinweises auf die Patenterteilung: **19.09.2012**
(21) Anmeldenummer: 05716068.1
(22) Anmeldetag: 15.03.2005
(51) Int. Cl.: C04B 14/10, C04B 28/02

(54) **BETONMISCHUNGEN, DIE BETONZUSATZSTOFFE ENTHALTEN**
CONCRETE MIXTURES CONTAINING CONCRETE ADDITIVES
COMPOSITIONS DE BETON CONTENANT DES ADJUVANTS DU BETON

(30) Priorität: 15.03.2004 DE 102004012536
(43) Veröffentlichungstag der Anmeldung: 20.12.2006
(73) Patentinhaber: Stephan Schmidt KG, 65599 Dornburg-Langendernbach (DE)
(72) Erfinder: SCHELLHORN, Matthias, 65556 Limburg a.d. Lahn (DE); BUDELMANN, Harald, 38302 Wolfenbüttel (DE); HARIRI, Karim Dr., 38108 Braunschweig (DE); MALONN, Tim, 38116 Braunschweig (DE)
(74) Vertreter: Müller, Eckhard
(86) Internationale Anmeldenummer: PCT/EP2005/002736
(87) Internationale Veröffentlichungsnummer: WO 2005/090257

(56) Entgegenhaltungen:
- WO-A-00/61515
- WO-A-95/11203
- WO-A-96/40598
- DE-C- 802 502
- DE-C- 859 873
- FR-A- 417 652
- US-A- 4 279 695
- US-A- 5 976 241
- PATENT ABSTRACTS OF JAPAN Bd. 1995, Nr. 05, 30. Juni 1995 (1995-06-30) & JP 07 033492 A (SEKISUI CHEM CO LTD), 3. Februar 1995 (1995-02-03)
- UMEZAMA NORISHIRO ET AL: "cement moldings" CHEMICAL ABSTRACTS + INDEXES, AMERICAN CHEMICAL SOCIETY. COLUMBUS, US, Bd. 104, Nr. 22, 2. Juni 1986 (1986-06-02), Seite 348, XP000061222 ISSN: 0009-2258
- PANCHENO, V.D.: "Manufacture and properties of monolithic lightweight concrete" CHEMICAL ABSTRACTS + INDEXES, AMERICAN CHEMICAL SOCIETY. COLUMBUS, US, Bd. 116, Nr. 10, 9. März 1992 (1992-03-09), Seite 408, XP000376747 ISSN: 0009-2258
- [Online] Gefunden im Internet: <URL:www.paleo.web.net/austrosed/abstr-SW3/ ottner.htm> [gefunden am 2002-02-18]
- [Online] Gefunden im Internet: <URL:www.a-m.de/deutsch/literatur/gp2292.ht m> [gefunden am 2001-02-21]
- HATZL, T., GEHLKEN P.-L.: "Mineralische Rohstoffe in der Ziegelindustrie - Wichtige Parameter in der täglichen Praxis des Geowissenschaftlers (Teil 2)", ZIEGELINDUSTRIE INTERNATIONAL ZI, vol. 12, 2001,

## Beschreibung

Die Erfindung bezieht sich auf Betonmischungen, die Betonzusatzstoffe enthalten und die Verwendung derartiger Betonzusatzstoffe.

Erdfeuchte Betonerzeugnisse, wie beispielsweise Bordsteine, Betondachsteine oder Pflastersteine, werden nach der Formgebung in der Schalungsform in der Regel direkt ausgeschalt und müssen daher eine ausreichend hohe Grünstandfestigkeit aufweisen. Mit Grünstandfestigkeit bezeichnet man das Maß für die Druckfestigkeit des Fertigerzeugnisses im grünen, nicht hydratisierten Zustand des Betons. Diese Größe ist eine besonders wichtige Eigenschaft solcher Betonfertigerzeugnisse, die produktionsbedingt nach der Formgebung und baldigen Ausschalung die gegebene Form unter ihrem Eigengewicht halten müssen.

Traditionelle erdfeuchte Betone werden in der Regel aus Wasser, Zement und Zuschlag hergestellt. In einigen Fällen werden Flugasche, Silika, Kurzschnittfasern, Fließmittel oder Polymerdispersionen hinzugegeben, um gewisse Eigenschaften der erdfeuchten Betone, wie zum Beispiel Verarbeitbarkeit oder Endfestigkeit, zu beeinflussen beziehungsweise zu verbessern.

Die traditionellen erdfeuchten Betone werden üblicherweise mit einem höheren Zementgehalt, einer geringen Menge von inerten Füllern und mit sehr niedrigen Wasserzementwerten von kleiner 0,4 hergestellt.

Produktionsbedingt besitzen erdfeuchte Betone einen hohen Anteil an Luftporen, was zu einer hohen Porosität der Produkte führen kann und eine Vegetation (Bemoosung, Flechten) an den Oberflächen begünstigt. Dies kann sich negativ auf die Lebensdauer und äußere Erscheinungsform auswirken.

Aus der EP-A-1 118 600 ist ein Lehmbaustoff bekannt, wie er insbesondere zur Herstellung von Lehmmörtel eingesetzt und als Wandputz zur Anwendung kommt. Aus der DE-A 195 42 676 ist ebenfalls eine Mörtelmischung auf Basis von Lehm mit einem geringen Zementanteil bekannt.

Demgegenüber werden an Beton, welcher auch als "künstlicher Stein" definiert wird (vgl. CD Römpp Chemie Lexikon - Version 1.0, Stuttgart/New York: Georg Thieme Verlag 1995), völlig andere Anforderungen hinsichtlich Festigkeit als an Lehmmörtel gestellt.

Die DE 802 502 C offenbart den Zusatz von Ton, Lehm oder Bentonit zu verpressenden, aus Zement und gegebenenfalls weiteren Zuschlagsstoffen bestehenden erdfeuchten Massen zur Erhöhung der Grünfestigkeit. Explizit werden unter anderem Massen beschrieben, welche 10 bis 20% Hochofenzement und 10 bis 20% Ton enthalten.

Demgemäß liegt der Erfindung die Aufgabe zugrunde, Betonmischungen, insbesondere für die Herstellung erdfeuchter Betonerzeugnisse anzugeben, welche zu einer verbesserten Grünstandfestigkeit der Betonerzeugnisse bei gleichzeitiger Wahrung der Vorzüge erdfeuchter Betoneigenschaften führen. Weiterhin sollen entsprechende Verfahren zur Herstellung von erdfeuchtem Beton angegeben werden. Schließlich ist es Aufgabe der Erfindung, entsprechende Betonzusatzstoffe bereitzustellen, die verbesserte Betonwarenprodukte hinsichtlich ihrer Eigenschaften bewirken.

Gelöst wird diese Aufgabe durch eine Betonmischung, enthaltend einen Betonzusatzstoff mit den Merkmalen des Anspruches 1. Vorteilhafte Ausgestaltungen finden sich in den Ansprüchen 2 und 3.

Der Zusatzstoff verschafft dem Beton eine deutlich erhöhte Kohäsion, die zu einer deutlichen Erhöhung der Grünstandfestigkeit führt. Durch den Zusatzstoff ändert sich das Gefüge des Betons. Die Zugabe von anorganischen Mineralgemischen erhöht den Feinkornanteil, so dass bei optimaler Wasserdosierung ein Frischbeton mit hoher Packungsdichte und kleinem Porenvolumen entsteht. Die Grünstandfestigkeit kann weiter erhöht werden, da das anorganische Mineralgemisch dem System eine verbesserte Kohäsion verleiht. Der Beton lässt sich besser verdichten, was die Partikelpackung weiter erhöht und letztlich den Anteil der eingeschlossenen Luft- und Kapillarporen stark reduziert. Darüber kann die Endfestigkeit des Betonfertigerzeugnisses gesteigert werden.

Durch den Betonzusatzstoff kann der Wassergehalt des Frischbetons wesentlich erhöht werden, was zu einer verbesserten Hydration des Zements führt und die Endfestigkeit des Betonfertigerzeugnisses wesentlich verbessert. Durch den Betonzusatzstoff lässt sich natürlich auch der Anteil an Zement in der Zementmischung beziehungsweise in dem Betonfertigerzeugnis wesentlich reduzieren. Ohne den Betonzusatzstoff kann der Wassergehalt des Frischbetons nicht ohne weiteres erhöht werden, da hierdurch wiederum die Grünstandfestigkeit erheblich leiden würde. So hat sich gezeigt, dass bei Zugabe des Betonzusatzstoffes der Wassergehalt des Frischbetons bezogen auf die Gesamtmischung um 2,5 Gew.-% und mehr erhöht werden kann, was einen erheblichen wirtschaftlichen Vorteil darstellt.

Durch die gezielte Zugabe von einem auf Ton basierenden Betonzusatzstoff ist es also möglich, die Verarbeitbarkeit stark zu verbessern und gleichzeitig die Grünstandfestigkeit zu gewährleisten beziehungsweise zu erhöhen. Bislang war man davon ausgegangen, dass bereits geringste Beimengungen von Ton in erdfeuchtem Beton zu einer deutlichen Reduzierung der Endfestigkeiten führen. Dies wurde unter anderem damit begründet, dass eine Hydration des Zementes durch die Anwesenheit von Ton unterbunden wird (vgl. CEMENT and CONCRETE RESEARCH, Vol. 11, pp. 531-539, 1981, Pergamon Press, Ltd., USA). Tatsächlich hat sich jedoch gezeigt, dass sich durch den Betonzusatzstoff ein verringerter Porenbeziehungsweise Kapillarporengehalt, eine erhöhte Frischbetonrohdichte, eine verbesserte Verdichtungswilligkeit, eine verbesserte Oberfläche und eine deutlich verringerte Gesamtporosität unter Wahrung des Frost/Tauwechsel-Widerstandes ergibt. Hierdurch werden insgesamt die mechanischen Eigenschaften des Betons stark verbessert.

Weiterhin ist es nach der Erfindung vorgesehen, dass der Betonzusatzstoff Kaolinit mit wenigstens 10 Gew.-% und Illit mit wenigstens 10 Gew.-% enthält. Die besondere Plastizität dieser Minerale bewirkt eine bessere Verarbeitbarkeit, die letztendlich zu einem geringeren Verdichtungsdruck und nochmals erhöhter Grünstandfestigkeit führt. Auch ist es hierdurch möglich, die Mineralgemische in ihrer Zusammensetzung einfach zu verändern, um werkspezifisch optimierte Eigenschaften herauszustellen.

Nach der Erfindung ist es vorgesehen, dass die feinverteilten Quarzanteile wenigstens 15 Gew.-% betragen. Eine mögliche hydraulische Wirkung des feinverteilten Quarzes führt zu einer weiteren Erhöhung der Endfestigkeit.

Auch hat es sich als besonders günstig erwiesen, wenn die spezifische Oberfläche des Zusatzstoffes größer als 5 m²/g ist.

Nach der Erfindung ist es auch möglich, dass im Bedarfsfalle der Zusatzstoff in einer Mischung zusätzlich ein Fließmittel aus den Stoffgruppen der Ligninsulphonate, Polykarboxylate, Naphtaline und/oder Verflüssiger und/oder Alkali- und/oder Erdalkalisalze enthält. Der Vorteil von Fließmittel ist es, den nicht durch den Betonzusatzstoff bedingten freien Wassergehalt zu reduzieren und somit die Grünstandfestigkeit weiter zu steigern. Insbesondere bei Verwendung von Zementen der Hauptzementart CEM I sind deutlich positive Effekte zu erzielen.

Die Erfindung lehrt auch die Verwendung des Betonzusatzstoffes zur Herstellung von erdfeuchten Betonerzeugnissen. Durch den Einsatz des Betonzusatzstoffes werden die Oberflächenqualität und die mechanischen Eigenschaften von erdfeuchten Betonfertigerzeugnissen wesentlich verbessert, bei gleichzeitiger Beibehaltung beziehungsweise Verbesserung der Grünstandfestigkeit. Dies wirkt sich besonders vorteilhaft bei der Herstellung von Sichtbeton aus.

Nach der Erfindung ist es auch möglich, den Betonzusatzstoff als Nebenbestandteil von Zementen oder Zementmischungen zu verwenden. Hierbei ist zu berücksichtigen, dass nach den einschlägigen Vorschriften Zemente oder Zementmischungen bis zu 5 Massen-% Nebenbestandteile aufweisen dürfen, ohne dass diese speziell deklariert werden müssen. Durch den Einsatz des Betonzusatzstoffes als Nebenbestandteil von Zement beziehungsweise Zementmischungen wird neben den verbesserten Materialeigenschaften des Betonerzeugnisses gleichzeitig der technische Aufwand zur Herstellung von Betonerzeugnissen wesentlich reduziert.

Im Rahmen der Erfindung liegt eine Betonmischung mit dem Betonzusatzstoff und einem Ton-/Zementverhältnis 0,5-30 Masse-%, vorzugsweise 2-20 Masse-%, wodurch die oben beschriebenen vorteilhaften Eigenschaften erzielt werden.

Nachfolgend wird die Erfindung anhand eines Ausführungsbeispieles näher beschrieben. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Die hier gewählte illustrative Ausführungsform bezieht sich auf eine erdfeuchte Betonrezeptur zur Herstellung von Betondachsteinen.

Dabei wurden eine erdfeuchte Ausgangsmischung nach Stand der Technik und 50 mit dem Zusatzstoff modifizierte Mischungen hergestellt. Um den Einfluss des Zusatzstoffes auf die Oberfläche und die mechanischen Eigenschaften des Betons darstellen zu können, wurde folgender Versuchsablauf gewählt, wobei die Versuche unter Laborbedingungen durchgeführt wurden:
1) Mischungs- und Probekörperherstellung
2) Beurteilung der Verarbeitbarkeit
3) Bestimmung des Luftporengehalts
4) Berechnung des Verdichtungsmaßes
5) Bestimmung der Grünstandfestigkeit
6) Prüfung der Druckfestigkeit
7) Begutachtung der Oberfläche mit einem Mikroskop
8) Bestimmung der Porosität durch Sättigung bei Atmosphärendruck und unter Vakuum

Nachstehend sind die illustrative Rezeptur der erdfeuchten Ausgangsmischung und die einer stark durch den Zusatzstoff verbesserten Mischung aufgelistet:

| **Rezeptur der Ausgangsmischung (Stand der Technik)** | **Rezeptur der modifizierten Mischung:** |
|---|---|
| 1500 kg/m³ Sand (0/3 mm) | 1400 kg/m³ Sand (0/3 mm) |
| | 100 kg/m³ Zusatzstoffe |
| 150 kg/m³ Wasser | 176,4 kg/m³ Wasser |
| 420 kg/m³ Zement (CEM I 52,5) | 420 kg/m³ Zement (CEM I 52,5) |
| | 1,2 M.-% v. Z. Fließmittel |

Zur Herstellung der Mischungen wurden die obenaufgeführten Stoffe in einem Zwangsmischer 3 Minuten gemischt. Das Mischungsvolumen betrug jeweils 25 Liter. Es wurden je drei Würfel, drei Zylinder und eine Platte hergestellt. Die Kantenlänge des Würfels betrug 15 Zentimeter. Die Würfel wurden auf dem Rütteltisch nach dem Einbringen des Frischbetons 30 Sekunden verdichtet. Die Zylinder hatten einen Durchmesser von 8 und eine Höhe von 16 Zentimeter. Sie wurden 10 Sekunden verdichtet. Die Abmessungen der Platten betrugen 20 cm x 20 cm x 2 cm Zentimeter. Der Beton wurde ebenfalls 10 Sekunden verdichtet. Die Würfel und die Platte wurden für 3 Stunden in einen Ofen gelegt und dann ausgeschalt. Anschließend wurden sie weitere 3 Stunden im Ofen getrocknet und 30 Minuten an der Umgebungsluft (ca. 24°C) abgekühlt.

Zur Bestimmung des Luftporengehalts wurde jeder Mischung eine Frischbetonprobe entnommen und in einen Messzylinder mit einem Volumen von 8 Litern eingebracht. Der Frischbeton wurde anschließend 10 Sekunden verdichtet. Mit Hilfe des Druckausgleichsverfahrens wurde der Luftporengehalt des Frischbetons gemessen.

Der Luftporengehalt der Ausgangsmischung betrug 22 Vol.-%, der der modifizierten, das heißt erfindungsgemäßen Mischung 4,5 Vol.-%. Die Frost/Tau-Beständigkeit der modifizierten Betone wurde in zusätzlichen Versuchungen nachgewiesen.

Die Frischbetonrohdichte wurde mit Hilfe des Luftporengefäßes und Wägung ermittelt.

Um eine Vergleichsmöglichkeit der Verdichtungswilligkeit der Ausgangsmischung mit der modifizierten Mischung zu erhalten, wurde die Frischbetonrohdichte der modifizierten Mischung durch die Dichte der Ausgangsmischung dividiert.

Die Frischbetonrohdichte der Ausgangsmischung betrug 1,910 kg/m³, die der modifizierten Mischung 2,253 kg/m³. Es ergab sich eine Verdichtungszahl von 1,0 für die Ausgangsmischung und von 1,18 für die modifizierte Mischung.

Nach der Verdichtung wurden die Zylinder umgehend mittels Druckluft ausgeschalt, in die Prüfmaschine eingebracht und belastet. Die Prüfmaschine hatte eine obere kugelgelagerte Prüfplatte, die sich der formbaren und unebenen Betonoberfläche der Zylinder anpassen konnte. Die Prüfgeschwindigkeit betrug 20 mm/min.

Die Ausgangsmischung wies eine Grünstandfestigkeit von 0,94 N/cm² auf. Die Grünstandfestigkeit der modifizierten Mischung lag bei 4,32 N/cm², was eine Steigerung von über 300% gegenüber der Mischung nach dem Stand der Technik bedeutete.

Die Druckfestigkeiten wurden an je drei Würfeln ermittelt. Nach dem Abkühlen an der Luft wurden die Probekörper durch eine Presse bis zum Versagen belastet. Die Prüfgeschwindigkeit betrug 0,5 N/mm²/s.

Die Ausgangsmischung wies eine Druckfestigkeit von 5,1 N/mm² auf. Die Druckfestigkeit der modifizierten Mischung lag bei 15,73 N/mm² und war somit um 300% höher als die Druckfestigkeit der Ausgangsmischung.

Zur Beurteilung der Oberfläche wurde aus der Platte eine kleinere Platte mit einer Kantenlänge von 8 x 8 cm und einer Höhe von 2 cm herausgesägt. Die Oberfläche dieser Platte wurde zum einen ohne eine Vergrößerung und zum anderen unter einem Lichtmikroskop fotografiert.

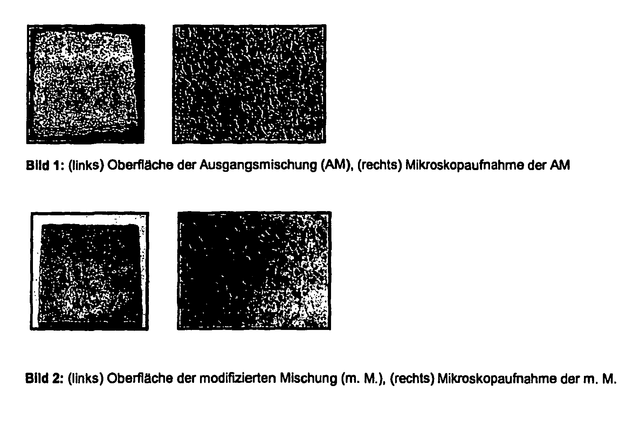

Die Platte der Ausgangsmischung wies eine offene Porosität auf. Die Oberfläche war eine körnige und raue Oberfläche ohne zusammenhängende geschlossene Flächen (siehe Bild 1). Aus dem Bild 2 ließ sich hingegen eine deutliche Verbesserung gegenüber der Ausgangsmischung erkennen. Es existierten zwar noch einige nicht verschlossene Luftporen an der Oberfläche, aber in diesem Bild ließen sich größere vollständig geschlossene Flächen erkennen. Die Oberflächen waren deutlich glatter als die der Ausgangsmischung.

Da die Probeplatten nahezu nicht verdichtet wurden, lassen sich die Oberflächen der modifizieren Betone durch einen Walzvorgang im Betonwerk nahezu vollständig verschließen.

Aus der großen Platte wurden drei 4 x 4 cm große und 2 cm hohe Platten herausgesägt. Aus diesen Proben wurde die Porosität berechnet. Das Messprinzip basiert darauf, dass durch Wasserlagerung der Proben der Wassergehalt bei Sättigung der Proben unter Atmosphärendruck und bei Sättigung im Vakuum ermittelt wird. Mittels dieses Verfahrens konnten aus dem Wassergehalt der Poren in den Sättigungszuständen die Gesamtporosität, die unter Atmosphärendruck durch Kapillarleitung füllbare Porosität, sowie die Trockenrohdichte und die Reindichte des Betons bestimmt werden.

Die Gesamtporosität der Ausgangsmischung betrug 34,6 Vol.-%, die der modifizierten Mischung nur 19,44 Vol.-%. Dies ist eine Reduzierung der Gesamtporosität von über 40%.

Die vorstehend beschriebenen Versuchsergebnisse sind in der nachfolgenden Tabelle zusammengefasst.

| | Luftporengehalt [Vol.-%] | Verdichtung [-] | Grünstandfestigkeit [N/cm²] | Druckfestigkeit [N/mm²] | Rohdichte [kg/m³] | Porosität [Vol.-%] |
|---|---|---|---|---|---|---|
| Ausgangsmischung (Stand der Technik) | 22,0 | 1,00 | 0,94 | 5,10 | 1,910 | 34,60 |
| modifizierte Mischung (Erfindung) | 4,5 | 1,18 | 4,32 | 15,73 | 2,253 | 19,44 |

Es sei darauf hingewiesen, dass die vorstehenden Versuchsergebnisse auch in die Praxis umgesetzt werden konnten.

## Patentansprüche

1. Betonmischung mit einem auf Ton basierenden Betonzusatzstoff mit einem Ton/Zement-Verhältnis von 0,5-30 Masse-%, vorzugsweise 2 - 20 Masse-%, wobei der Betonzusatzstoff 20-100 Gew.-% Tonminerale enthält, **dadurch gekennzeichnet, dass** der Betonzusatzstoff 20%-100%, vorzugsweise 50-70Gew.-%, mit einem Feinstkornanteil von ≤ 2 µm vorliegt und Kaolinit mit wenigstens 10 Gew.-% und Illit mit wenigstens 10 Gew.-% enthält und dass ein Anteil an feinverteiltem Quarz im Mineralgemisch wenigstens 15 Gew.-% beträgt, wobei der Quarz mit 10 bis 80 Gew.-%, vorzugsweise 25 bis 45 Gew.-%, in einer Korngröße ≤ 63 µm in dem Betonzusatzstoff vorliegt.

2. Betonmischung nach einem der vorhergehenden Ansprüche, **dadurch gekennzeichnet, dass** die spezifische Oberfläche des Betonzusatzstoffs mindestens 5 m²/g beträgt.

3. Betonmischung nach einem der vorhergehenden Ansprüche, **dadurch gekennzeichnet, dass** der Betonzusatzstoff in einer Mischung zusätzlich Fließmittel und/oder Verflüssiger auf Basis der Stoffgruppen Ligninsulphonate, Polykarboxylate beziehungsweise Naphtaline und/oder Alkali- und/oder Erdalkalisalze enthält.

4. Verwendung eines Betonzusatzstoffs zur Herstellung eines erdfeuchten Betonerzeugnisses, wobei der Betonzusatzstoff 20-100 Gew.-% Tonminerale enthält, **dadurch gekennzeichnet, dass** der Betonzusatzstoff 20%- 100%, vorzugsweise 50-70Gew.-%, mit einem Feinstkornanteil von ≤ 2 µm vorliegt und Kaolinit mit wenigstens 10 Gew.-% und Illit mit wenigstens 10 Gew.-% enthält und dass ein Anteil an feinverteiltem Quarz im Mineralgemisch wenigstens 15 Gew.-% beträgt, wobei der Quarz mit 10 bis 80 Gew.-%, vorzugsweise 25 bis 45 Gew.-%, in einer Korngröße ≤ 63 µm in dem Betonzusatzstoff vorliegt.

5. Verwendung des Betonzusatzstoffes nach Anspruch 4 als Nebenbestandteil von Zement oder Zementmischungen.

## Claims

1. Concrete mixture with a concrete additive, which is based on clay, with a clay/cement ratio of 0.5 - 30 mass %, preferably 2 - 20 mass %, wherein the concrete additive comprises 20 - 100 weight % clay minerals, **characterised in that** the concrete additive is present 20% - 100%, preferably 50 - 70 weight %, with a very fine grain proportion of ≤ 2 µm and contains kaolinite with at least 10 weight % and illite with at least 10 weight % and that a proportion of finely distributed quartz in the mineral mixture is at least 15 weight %, wherein the quartz is present with 10 to 80 weight %, preferably 25 to 45 weight %, in a grain size ≤ 63 µm in the concrete additive.

2. Concrete mixture according to the preceding claim, **characterised in that** the specific area of the concrete additive is at least 5 m²/g.

3. Concrete mixture according to one of the preceding claims, **characterised in that** the concrete additive additionally contains in a mixture solvents and/or liquefiers on the basis of the substance groups of lignosulfonates, polycarboxylates or naphthalenes and/or alkali and/or earth alkali salts.

4. Use of a concrete additive for producing a slightly moist concrete product, wherein the concrete additive contains 20 - 100 weight % clay minerals, **characterised in that** the concrete additive is present 20% - 100%, preferably 50 - 70 weight %, with a very fine grain proportion of ≤ 2 µm and contains kaolinite with at least 10 weight % and illite with at least 10 weight % and that a proportion of finely distributed quartz in the mineral mixture is at least 15 weight %, wherein the quartz is present with 10 to 80 weight %, preferably 25 to 45 weight %, in a grain size ≤ 63 µm in the concrete additive.

5. Use of the concrete additive according to claim 4 as a secondary component of cement or cement mixtures.

## Revendications

1. Composition de béton comportant un additif pour béton à base d'argile, à un rapport argile/ciment de 0,5-30 % en masse, de préférence de 2 - 20 % en masse, l'additif pour béton contenant 20-100 % en poids de minéraux argileux, **caractérisée en ce que** l'additif pour béton est présent à raison de 20 % - 100 %, de préférence 50-70 % en poids, avec une fraction de fines de ≤ 2 µm et contient de la kaolinite à raison d'au moins 10 % en poids et de l'illite à raison d'au moins 10 % en poids et **en ce qu'**une proportion de quartz finement divisé dans le mélange de minéraux est d'au moins 15 % en poids, dans l'additif pour béton le quartz étant présent en une taille de grain ≤ 63 µm à raison de 10 à 80 % en poids, de préférence de 25 à 45 % en poids.

2. Composition de béton selon la revendication 1, **caractérisée en ce que** la surface spécifique de l'additif pour béton est d'au moins 5 m²/g.

3. Composition de béton selon l'une quelconque des revendications précédentes, **caractérisée en ce que** l'additif pour béton en outre contient en un mélange un fluidifiant et/ou plastifiant à base des groupes de substances ligninesulfonates, polycarboxylates ou naphtalènes et/ou sels alcalins et/ou alcalino-terreux.

4. Utilisation d'un additif pour béton pour la production d'un produit de type béton à consistance de terre humide, l'additif pour béton contenant 20-100 % en poids de minéraux argileux, **caractérisée en ce que** l'additif pour béton est présent à raison de 20 % - 100 %, de préférence 50-70 % en poids, avec une fraction de fines de ≤ 2 µm et contient de la kaolinite à raison d'au moins 10 % en poids et de l'illite à raison d'au moins 10 % en poids et **en ce qu'**une proportion de quartz finement divisé dans le mélange de minéraux est d'au moins 15 % en poids, dans l'additif pour béton le quartz étant présent en une taille de grain ≤ 63 µm à raison de 10 à 80 % en poids, de préférence de 25 à 45 % en poids.

5. Utilisation de l'additif pour béton selon la revendication 4, en tant que composant accessoire de ciment ou de compositions de ciment.
